# EUROPEAN PATENT APPLICATION

(11) **EP 4 749 787 A1**
(43) Date of publication of application: **27.05.2026**
(21) Application number: 24215372.4
(22) Date of filing: 26.11.2024
(51) Int. Cl.: H01M 50/209, H01M 50/242, H01M 50/249, H01M 50/271

(54) **BATTERY PACK WITH BOTTOM COVER AND ELECTRIC VEHICLE**

(71) Applicant: Samsung SDI Co., Ltd., Yongin-si, Gyeonggi-do 17084 (KR)
(72) Inventor: Altenburger, Florian, 8160 Weiz (AT); Bauer, Manuel, 8434 Tillmitsch (AT); Floh, Guenter, 8052 Graz (AT); Pichler, Daniel, 8041 Graz (AT); Breznik, Mihael, 2235 Sveta Trojica (SI)
(74) Representative: Gulde & Partner

(57) **Abstract**

The present disclosure refers to a battery pack 100, including a battery pack housing 50 for accommodating a plurality of battery cells 60 therein, the battery pack housing 50 comprising a bottom plate 52; a bottom cover 10 arranged below the bottom plate 52 of the battery pack housing 50; a corrugated or trapezoidal sheet 20 disposed between the bottom plate 52 of the battery pack housing 50 and the bottom cover 10. The corrugated or trapezoidal sheet 20 is not directly fixed to the bottom plate 52 of the battery pack housing 50.

## Description

### Field of the Disclosure

The present disclosure relates to a battery pack with a bottom cover attached to a housing of the battery pack.

### Technological Background

A battery module is formed of a plurality of battery cells connected in series or in parallel. That is, the battery module is formed by interconnecting the electrode terminals of the plurality of battery cells depending on a required amount of power and in order to realize a relatively high-power rechargeable battery.

Battery modules can be constructed in either a block design or in a modular design. In the block design each battery cell is coupled to a common current collector structure and a common battery management system and the unit thereof is accommodated in a housing. In the modular design, pluralities of battery cells are connected together to form submodules and several submodules are connected together to form the battery module. In automotive applications, battery systems may include a plurality of battery modules connected together in series to provide a desired voltage.

A battery pack is a set of any number of (for example identical) battery modules or single battery cells. The battery modules, or respectively the battery cells, may be configured in a series, parallel or a mixture of both to provide the desired voltage, capacity, and/or power density. Components of a battery pack include the individual battery modules, and interconnects, which provide electrical conductivity between the battery modules.

Mechanical integration of a battery pack is achieved by appropriate mechanical connections between the individual components, for example, between the battery modules, and between them and a supporting structure of the vehicle. These connections should remain functional and save during the average service life of the battery system. Further, installation space and interchangeability specifications should be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

A conventional battery system, despite any modular structure, usually includes a battery housing that acts as an enclosure to seal the battery system against the environment and provides structural protection of the battery system's components. Housed battery systems are usually mounted as a whole into their application environment, e.g. an electric vehicle. Thus, the replacement of defective system parts, for example, a defective battery submodule, requires dismounting the entire battery system and removal of its housing first. Even defects of small and/or cheap system parts may require to dismounting and replacement of the entire battery system and its separate repair. Because high-capacity battery systems are expensive, large and heavy, the procedure is burdensome, and the storage, for example, in the mechanic's workshop, of the bulky battery system is difficult.

Extra-large batteries need to overcome the structural problems they face due to their length and width. One problem in the development of EV batteries is to create strong bottom covers within a limited space. The strength is required for passing so called bollard impacts tests. This requirement should be solved by using as little space as possible. Therefore, a problem to be solved is how to strengthen the bottom of a battery pack in an efficient manner.

For example, US 2023/014338 A1 and US 2020/198453 A1 disclose a battery pack utilizing a corrugated sheet for a bottom of a battery pack for increasing stiffness and protection from obstacles.

### Summary of Invention

The invention is defined by the appended claims. The description that follows is subjected to this limitation. Any disclosure lying outside the scope of the claims is only intended for illustrative as well as comparative purposes.

According to one aspect of the present disclosure, a battery pack, includes a battery pack housing for accommodating a plurality of battery cells therein, the housing comprising a bottom plate; a bottom cover arranged below the bottom plate of the battery pack housing; a corrugated or trapezoidal sheet disposed between the bottom plate of the battery pack housing and the bottom cover, wherein the corrugated or trapezoidal sheet is not directly fixed to the bottom plate of the battery pack housing.

According to another aspect of the present disclosure, an electric vehicle includes the aforementioned battery pack.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
Fig. 1 illustrates a schematic cross-sectional view of a battery pack according to an embodiment.
Fig. 2 illustrates a perspective view of a bottom cover according to another embodiment.
Fig. 3 illustrates a sectional view of the bottom of Fig. 2 along line A-A'.
Fig. 4 illustrates a schematic view of an electric vehicle according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a region, or an element is referred to as being "above" or "on" another region or element, it can be directly on the other region or element, or intervening regions or elements may also be present.

Herein, the terms "upper" and "lower" are defined according to the z-axis. For example, the upper cover is positioned at the upper part of the z-axis, whereas the lower cover is positioned at the lower part thereof. In the drawings, the relative sizes of elements, layers, and regions may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery pack includes at least the following. Firstly, a battery pack housing for accommodating a plurality of battery cells therein, the battery pack housing including a bottom plate. Secondly, a bottom cover arranged below the bottom plate of the battery pack housing is included. Thirdly, the battery pack includes a corrugated or trapezoidal sheet disposed between the bottom plate of the battery pack housing and the bottom cover, wherein the corrugated sheet or trapezoidal is not directly fixed to the bottom plate of the battery pack housing.

In other words, the corrugated or trapezoidal sheet is held or assembled between the bottom plate of the battery pack housing and the bottom cover, but there are no fixing elements to create a direct mechanical connection between the corrugated or trapezoidal sheet and the bottom plate. Rather, there may be a (for example, detachable) mechanical connection of the corrugated or trapezoidal sheet to the bottom cover, i.e. the corrugated or trapezoidal sheet may be (directly) fixed to the bottom cover of the battery pack. Thereby, the bottom cover together with the corrugated or trapezoidal sheet can be removed from the rest of the battery pack in one work step, e.g. for crash replacement.

Generally, corrugated sheets (i.e. a sheet panel with a wavy profile) or trapezoidal sheets (i.e. a sheet panel with a rectangle wavy profile) provide a strong rigidity while only requiring a thin sheet of which it can be formed. Thereby, the corrugated or trapezoidal sheet is light weight compared to a solid structure. Additionally, in case of an impact, the corrugated or trapezoidal sheet with its hollow sections may deform and dampen impacts without deforming to the inside of the battery pack housing. The corrugated or trapezoidal sheet may have a thickness in the range of 0.1 mm to 5 mm. Optionally, the thickness may be in a range between 0.5 mm and 2.0 mm. This range provides an optimal compromise between stability and weight. Optionally, two or more corrugated or trapezoidal sheets may be provided in a stacked manner. Despite its light weight, corrugated or trapezoidal sheets have a good load-bearing capacity and can withstand high mechanical loads. Corrugated sheets are lighter, while trapezoidal sheets have greater rigidity and stability. The corrugated or trapezoidal sheet may be formed of a metallic material, for example of stainless steel.

The bottom cover is fitted to the underside of the battery pack and thus forms part of the electric vehicle floor when used as intended. The bottom cover is designed to provide protection against stone chipping and weathering at the lower side of the battery pack. The bottom cover may have a thickness in the range of 0.5 mm to 5 mm. Optionally, the thickness may be in a range between 1.0 mm and 3 mm. The bottom cover may be formed of a metallic material, for example of stainless steel.

The bottom cover may be detachable fixed (or connected) to the bottom plate of the battery pack housing. A detachable fixation of the bottom cover to the bottom plate may facilitate repair of the battery pack, for example, after an accident or impact of an obstacle from below the battery pack. According to one embodiment, one or more fixing elements are attached to a side of the bottom cover opposite the bottom plate of the battery pack housing, the fixing elements being configured to assist a detachable fixation of the corrugated sheet to the bottom plate. The fixing elements may be formed integrally with or separately from the bottom cover. The fixing elements may be provided with one or more through holes for the fixation of the fixing elements to the bottom plate of the battery pack housing by separate fixing members like, for example, screws. The fixing elements may have an oval shape. Optionally, the fixing elements may have the shape of a plateau. Further optionally, the through holes may have different diameters.

According to another embodiment, the battery pack further includes one or more foam sheets disposed between the corrugated or trapezoidal sheet and the bottom plate. The foam sheets may be configured to dampen a contact between the corrugated or trapezoidal sheet and/or the bottom cover with the bottom plate. This reduces vibrations and/or accommodates for tolerances between the corrugated or trapezoidal sheet and the bottom cover. Further, a firm seat of the bottom cover on the bottom plate is ensured.

According to another aspect, an electric vehicle includes the battery pack according to an aspect mentioned above. As mentioned above, the battery pack has beneficial characteristics for electrical vehicles, that is, high resistance to an impact. The strength is, however, not limited to impacts from below but also beneficial for side impacts or front impacts. Thereby, the battery pack may be prevented from deformation and damage to the battery cells.

### Specific Embodiments

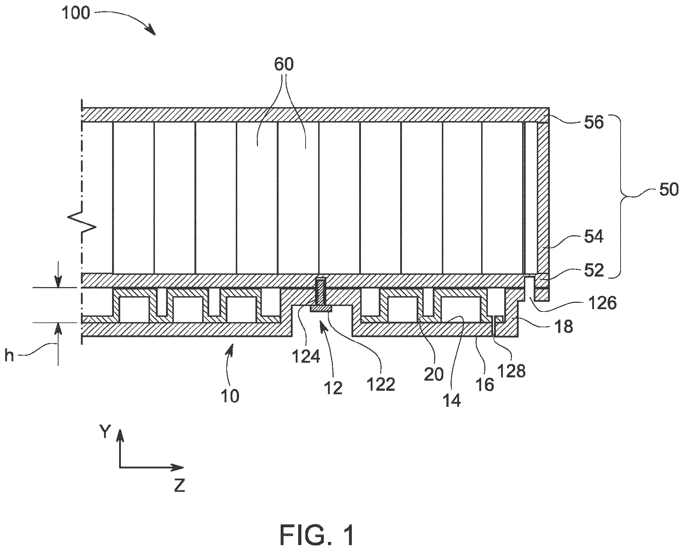

Fig. 1 is a schematic cross-sectional view on a part of a battery pack 100 according to an embodiment. The battery pack 100 includes a battery pack housing 50 for accommodating a plurality of battery cells 60 therein. The battery cells 60 are encased in a battery pack housing 50. The battery pack housing 50 includes a bottom plate 52, a plurality of side walls 54 and a top cover 56. In other words, the battery pack housing 50 encloses a distinct volume.

Further, a bottom cover 10 is arranged below the bottom plate 52 of the battery pack housing 50, between which a corrugated or trapezoidal sheet 20 is disposed. That is, the corrugated or trapezoidal sheet 20 fills the space between the bottom plate 52 of the battery pack housing 50 and the bottom cover 10. That is, the corrugated or trapezoidal sheet 20 is directly fixed the bottom cover 10 through one or more first through holes 128. Here, the corrugated or trapezoidal sheet is fixed by rivets (no shown) which extend through the first through hole(s) 128. However, any other fixing elements may also be used. The corrugated or trapezoidal sheet 20 is not fixed to the bottom plate 52 of the battery housing 50.

The bottom cover 10 includes one or more fixing elements 12 attached to an inner side 14 of the bottom cover 10 opposite the bottom plate 52 of the battery pack housing 50, the fixing elements 12 being configured to assist a detachable fixation of the bottom cover 10 together with the corrugated or trapezoidal sheet 20 to the bottom plate 52. In this embodiment, one or more second through holes 124 are located at the fixing elements 12 and a plurality of third through holes 126 are located at an edge of the bottom cover 10.

The corrugated or trapezoidal sheet 20 is one single sheet with cutouts for the fixing elements 12 of the bottom cover 10. Here, the fixing elements 12 are integrally formed from the bottom cover 10, for example, by punching. However, the fixing elements 12 may also be produced separately and fixed to the bottom cover 10 by any fixation method, that is, in a form-fitting manner and/or a force-fitting manner and/or a materially bonded manner.

At the location of the second through hole 124, the bottom plate 52 has a corresponding opening for accommodating a fixing member, that is, a screw 122. The screw 122 goes through the second through hole 124 and is screwed into a corresponding opening in the bottom plate 52 including a corresponding thread. The screw 122 fixes the bottom cover 10 to the bottom plate 52. Thereby, the corrugated or trapezoidal sheet 20 is at least form-fittingly held between the bottom cover 10 and the bottom plate 52. Additionally, the bottom cover 10 is, similarly, fixed to the to the bottom plate 52 through at least one third through hole 126. Another fixing member (not shown) extends through the third through hole 126 and is screwed into another corresponding opening in the bottom plate 52 including another thread corresponding to the other fixing member.

Further, the bottom cover 10 includes bottom cover side walls 18 having a height (x-direction). The bottom cover side walls 18 of the bottom cover 10 enclose a volume of a trough such that the corrugated or trapezoidal sheet 20 is accommodated therein. The inner height h of the bottom cover 10 extending from the inner side 14 to the bottom plate 52 is equal to the height of the corrugated or trapezoidal sheet 20.

In this embodiment, the corrugated or trapezoidal sheet 20 has a trapezoidal shape, i.e. it has a rectangular wavy profile. The flat crests of the trapezoidal sheet 20 are in contact with the bottom plate 52. Further, the flat troughs of the trapezoidal sheet 20 are in contact with the bottom cover 10.

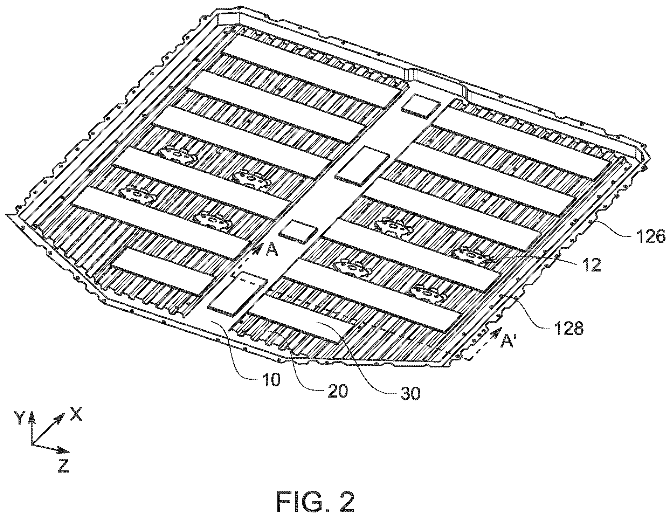

Fig. 2 illustrates a perspective view of a bottom cover 10 according to another embodiment. Unless described otherwise, all explanations from above apply accordingly. In this view, a plurality of foam sheets 30 are located on the corrugated or trapezoidal sheet 20, wherein the battery pack housing 50 with the bottom plate 52 is not shown. In other words, the bottom cover 10 together with the corrugated or trapezoidal sheet 20, as shown in Fig. 1, is shown in a removed state from the battery pack housing 50. This is due to the bottom cover 10 being detachably connected to the bottom plate 52. This facilitates easy replacement of the bottom cover 10. The foam sheets 30 are disposed between the corrugated or trapezoidal sheet 20 and the bottom plate 52. Briefly referring back from the embodiment of Fig. 2 to the embodiment in Fig. 1, the cross-sectional view of Fig. 1, despite being a different embodiment, would be taken at a position with one fixing elements 12 but without a foam sheet along a line parallel to the line A - A'.

In Fig. 2, the corrugated or trapezoidal sheet 20 is made of two parts, one for a left side and one for a right side of the bottom cover 10. Left and right refer to the z-direction. Front and rear extend along the x-direction, wherein the front is the side closest to the viewer in Fig. 2. A gap without a corrugated or trapezoidal sheet 20 is formed in a middle section of the bottom cover 10. The middle section extends from a front edge to a rear edge of the bottom cover 10. However, one or more pieces of foam sheet 30 are present in the middle section of the bottom cover 10. In detail, two longer pieces of foam sheet 30 and two shorter pieces of foam sheet 30 are intermittently aligned in longitudinal direction (x-direction) of the bottom cover 10.

In this embodiment, each corrugated or trapezoidal sheet 20 has four cutouts for accommodating four fixing elements 12, respectively. Here, each fixing elements 12 includes a centrally positioned second through hole 124. The second though holes 124 are used for fixation of the bottom cover 10 to the bottom plate 52 (not shown) of the battery pack 100. Additionally, the bottom cover 10 includes third through holes 126, which are also used for fixation to the bottom plate 52. Further, the corrugated or trapezoidal sheet 20 includes first through holes 128 at the edge of the corrugated or trapezoidal sheet 20. Thereby, the corrugated or trapezoidal sheet 20 is fixed to the bottom cover 10.

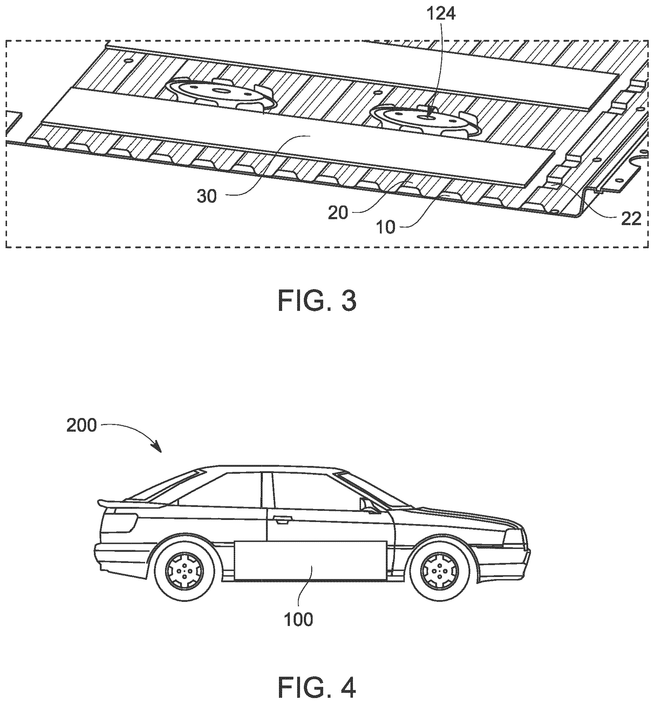

Fig. 3 illustrates a detailed sectional view of the bottom cover 10 of Fig. 2 along line A-A'. Unless described otherwise, all of the explanations above apply accordingly. Here, the fixing elements 12, having an oval or plateau shape, are completely surrounded by the corrugated or trapezoidal sheet 20. The foam sheet 30 is displaced from the openings of the corrugated or trapezoidal sheet 20 accommodating the fixing elements 12. The foam sheet 30 extends in a width direction (z-direction) of the bottom cover 10.

In this embodiment, the foam sheet 30 is at least partly accommodated within a crest of the corrugated or trapezoidal sheet 20. That is, the foam sheet 30 is at least partly located in the area between two crests of the corrugated or trapezoidal sheet 20. Thereby, the foam sheet 30 is not completely compressed during installation of the bottom cover 10 to the bottom plate 52 and retains its flexibility. For accommodating the foam sheet 30, the crests of the corrugated or trapezoidal sheet 20 includes depressions 22. The foam sheet 30 covers at least 90% of the width (z-direction) of the depressions 22. The corrugated or trapezoidal sheet 20 is a reinforcement inlay.

Fig. 4 illustrates a schematic view of an electric vehicle 200 according to an embodiment. Unless described otherwise, all of the explanations above apply accordingly. The electric vehicle 200 includes the battery pack 100 as described above. The battery pack 100 is equipped with the bottom cover 10 protecting the bottom of the battery pack 100. The bottom cover 10 is detachable from the bottom plate 52 to facilitate maintenance and/or repair.

### Reference signs

- 10: bottom cover
- 12: fixing elements
- 14: inner side
- 16: outer side
- 18: bottom cover side wall
- 20: corrugated or trapezoidal sheet
- 22: depression
- 30: foam sheet
- 50: battery pack housing
- 52: bottom plate
- 54: side wall
- 56: top cover
- 60: battery cell
- 100: battery pack
- 122: screw
- 124: second through hole
- 126: third through hole
- 128: first through hole
- 200: electric vehicle

## Claims

1. A battery pack (100), comprising:
a battery pack housing (50) for accommodating a plurality of battery cells (60) therein, the battery pack housing (50) comprising a bottom plate (52);
a bottom cover (10) arranged below the bottom plate (52) of the battery pack housing (50);
a corrugated or trapezoidal sheet (20) disposed between the bottom plate (52) of the battery pack housing (50) and the bottom cover (10), wherein the corrugated or trapezoidal sheet (20) is not directly fixed to the bottom plate (52) of the battery pack

2. The battery pack (100) as claimed in claim 1, wherein the corrugated or trapezoidal sheet (20) is fixed to the bottom cover (10).

3. The battery pack (100) as claimed in claim 1 or 2, further comprising one or more foam sheets (30) disposed between the corrugated or trapezoidal sheet (20) and the bottom plate (52).

4. The battery pack (100) as claimed in any one of the preceding claims, wherein the bottom cover (10) is detachably fixed to the bottom plate (52).

5. The battery pack (100) as claimed in claim 4, wherein one or more fixing elements (12) are attached to a side of the bottom cover (10) opposite the bottom plate (52) of the battery pack housing (50), the fixing elements (12) being configured to assist a detachable fixation of the corrugated or trapezoidal sheet (20) to the bottom plate (52).

6. An electric vehicle (200) comprising the battery pack (100) as claimed in any one of the preceding claims.
